# EUROPEAN PATENT APPLICATION

(11) **EP 4 084 257 A1**
(43) Date of publication of application: **02.11.2022**
(21) Application number: 21171198.1
(22) Date of filing: 29.04.2021
(51) Int. Cl.: H02J 3/30, H02J 3/38, H02J 3/48

(54) **CONTROL ARRANGEMENT OF A WIND POWER PLANT**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention describes a control arrangement (1) of a wind power plant (2) comprising a number of wind turbines (20) and a number of storage arrangements (21), which control arrangement (1) comprises a first monitoring module (10) configured to determine a first power quantity (P₂₀) stored in the rotating mass (200) of a wind turbine (20); a computation module (11) configured to predict a power curve progression (PCP) during injection (Tᵢ) of the first power quantity (P₂₀) into the grid (3) and during a subsequent theoretical recovery phase (Tᵣ); a second monitoring module (12) configured to determine a second power quantity (P₂₁) available in a storage arrangement; and a response management module (13) configured to identify a time instant (t₀) at which to commence release of the second power quantity (P₂₀) in order to maintain the combined output power (Pₜₒₜₐₗ) of the wind power plant (2) at a pre-defined threshold (Pₗᵢₘᵢₜ) during inertial response following a grid under-frequency event.

## Description

### Background

A wind power plant may comprise any number of wind turbines. It is usual to operate a wind power plant to convert as much wind energy as possible into electrical power, and to export this to a grid. Since wind speed fluctuates, commercially operated wind power plants generally deploy variable-speed wind turbines. A wind power plant must be controlled in such a way as to comply with various grid requirements, one of which is the ability to respond to grid under-frequency events in order to contribute to grid frequency stability. In case of a drop in grid frequency, a variable-speed wind turbine can release kinetic energy stored in its rotating mass. In this way, additional power can be injected into the grid for a short period of time, assisting the grid frequency to return to its nominal level. This inertial response may also be referred to as inertia emulation, virtual inertia and synthetic inertia.

However, the inertial response of a wind turbine is limited. Furthermore, the rotational speed of the wind turbine's aerodynamic rotor decreases as it releases the stored kinetic energy. When the aerodynamic rotor has slowed to its minimum allowable rotational speed, it takes some time for the wind turbine to recover towards its operating point prior to the under-frequency event.

Therefore, while it is possible to mitigate the drop in grid frequency using inertial response of the wind power plant, the grid frequency may exhibit a further subsequent "dip" or decrease during the recovery period of the wind power plant. As a result, it takes longer for the system frequency to return to its nominal value.

It is therefore an object of the invention to provide a way of operating a wind power plant to overcome the problem described above.

This object is achieved by the control arrangement of claim 1 and by the method of claim 7 of controlling a wind power plant.

### Description

In the context of the invention, a wind power plant (or "wind energy plant") shall be understood to comprise a number of wind turbines and a number of storage devices.

According to the invention, the control arrangement comprises at least the following: a monitoring module configured to determine a first quantity of power stored in the rotating mass of a wind turbine at a current operating point; a computation module configured to predict the power curve progression during injection of the first power quantity into the grid and during a subsequent recovery phase towards the previous operating point; a monitoring module configured to determine a second quantity of power available in a storage device; and a response management module configured to identify a time instant at which to commence release of the second power quantity in order to maintain the combined output power of the wind power plant at pre-defined threshold during inertial response following a grid under-frequency event.

The first power quantity can be regarded as a "surplus power" or "power boost", i.e. the amount of power in excess of the power output at the operating point of the wind turbine. By releasing the kinetic energy stored in its rotating mass, a variable-speed wind turbine operating at a certain operating point (depending on various factors such as the current wind conditions) may be able to increase its power output for a brief period following a negative grid excursion. At some point following a grid under-frequency event, the rotor speed will have decreased to its minimum allowable speed and the store of kinetic energy will be depleted. The power curve progression then enters a deficit or recovery phase, as the rotor speed and power output increase once more towards the previous operating point. During this recovery period, the power output by a wind energy plant controlled using a prior art approach is lower than the power it was generating prior to the negative frequency event. The duration of the recovery phase will depend on the time it takes for the rotational velocity of the aerodynamic rotor to increase.

An advantage of the inventive control arrangement is that, by identifying the optimal time to commence releasing the second quantity of stored power, as well as identifying the optimal shape of active power provision of this stored energy, a second frequency dip during the recovery period of the wind turbines can be avoided and the resulting combined active power provision of the power plant remains positive throughout the grid frequency event. Using the inventive control method, the power deficit of the power progression curve is negated by careful timed release of the additional power from the storage arrangement. In other words, the grid will not notice the recovery period of the wind energy plant and will not experience a secondary frequency dip. The inventive control method ensures positive active power provision following a grid under-frequency event, i.e. the total or net active power injected by the wind power plant into the grid remains above a pre-defined level following the grid frequency event, without any power deficit, and this pre-defined level is preferably the power output immediately prior to the frequency event. By "cancelling out" the recovery period (during which a prior art wind power plant delivers output power that is less than its previous output level), i.e. by timing the release of power from the storage arrangement in a more intelligent manner, the recovery period of the wind turbine will not have a negative effect on the grid.

According to the invention, the method of controlling a wind power plant comprises the steps of determining a first quantity of power stored in the rotating masses of the wind turbines of the wind power plant; predicting the power curve progression through injection and recovery if the stored kinetic energy would be used to inject additional power into the grid; monitoring the change in wind speed during release of the stored kinetic energy of the wind turbine rotor; determining a second quantity of power available in storage devices of the wind power plant; and identifying a time instant at which to release the second power quantity in order to maintain the combined output power of the wind power plant above a pre-defined threshold during inertial response following a grid under-frequency event. The time instant is identified on the basis of the predicted power curve progression and the available second power quantity.

Various units or modules of the control arrangement can be completely or partially realised as software modules running on a processor of a controller of the wind power plant.

Particularly advantageous embodiments and features of the invention are given by the dependent claims, as revealed in the following description. Features of different claim categories may be combined as appropriate to give further embodiments not described herein.

In the following, it may be assumed that the rotating mass of a wind turbine is its aerodynamic rotor, usually comprising three rotor blades mounted to a hub or spinner. It may also be assumed that a wind turbine is a variable-speed wind turbine with rotor blades that can be pitched to adjust the rotor speed and torque, and which can be controlled to provide inertial response following a negative grid frequency event. A negative frequency event can be identified by a grid frequency monitor, for example, as will be known to the skilled person. A variable-speed wind turbine may be assumed to include a power converter with a generator-side converter and a grid-side converter connected by a DC-link, and a converter controller.

The first power quantity is a measure of the kinetic energy stored in the rotating mass of a variable-speed wind turbine, and may be referred to as the rotor kinetic energy. As explained above, the advantage of the inventive approach is that the total output power - power from the rotor kinetic energy plus stored power - can be maintained above a desired minimum level or threshold. In a preferred embodiment of the invention, this threshold is the power output prior to the negative frequency event.

A suitable threshold may be identified during a planning stage of a wind power plant. In a further preferred embodiment of the invention, therefore, the threshold is identified on the basis of the wind turbine types deployed in the wind power plant, and on the basis of the storage device types deployed in the wind power plant. For example, in a certain wind power plant with a plurality of wind turbines and a storage device for each wind turbine, a suitable threshold may be identified as: at least 90%, more preferably at least 95%, most preferably at least 99% of the power output level preceding the under-frequency event. The kinetic energy stored in the rotating mass of a wind turbine can be released by increasing the electrical torque of the generator through appropriate adjustment of converter control setpoints. This torque increase, under constant or falling wind speed will result in reduction of the rotational speed of the generator.

The power curve progression, i.e. the predicted shape of the power curve - is preferably determined on the basis of various inputs such as wind speed, wind speed evolution during providing inertial response, pitch angle, rotational speed of the aerodynamic rotor, aerodynamic rotor speed deceleration rate, rotational speed of the generator rotor, grid frequency, etc. These parameters may be provided by various sensors, monitoring arrangements etc., as will be known to the skilled person.

The second monitoring module is configured to determine the second power quantity available in a storage arrangement, for example in one or more storage devices such as super-capacitors, batteries, flywheels, etc. The available quantity of power stored in these devices can be monitored using any suitable means, as will be known to the skilled person. Knowing the type(s) of storage device and the quantity of stored power, the response management module can determine the level of control with which the power can be released, and the most suitable point in time at which to commence release following a negative frequency event.

A wind power plant may be a wind park with many wind turbines, for example an offshore wind park with 100 or more wind turbines. It is generally the case that, at any one point in time, the wind turbines of a wind park will be operating at different setpoints chosen by the park controller to achieve a target output power. In other words, the quantities of kinetic energy stored in the rotors of the individual wind turbines may differ greatly. Therefore, the inventive method preferably also comprises a step of determining the total amount of kinetic energy stored in the rotors of the wind turbines, and using this information (as well as the monitored parameters mentioned above) to determine the shape of the inertial response of each individual wind turbine. In this way, different shapes of inertial response can be determined for each individual wind turbine to minimize the recovery period of the collective wind power plant as a whole. Preferably, a central controller of the wind power plant dictates changes in the inertial response of each individual wind turbine, depending on the monitored parameters of the whole wind park with the aim of minimizing the recovery period of the inertial response of the collective wind power plant. The power available in the various storage arrangements is released as described above to optimize the recovery period of the wind power plant.

In a preferred embodiment of the invention, the step of predicting the power curve progression comprises a step of identifying the time at which the power output decreases to the previous output power level. Similarly, in a further preferred embodiment of the invention, the step of predicting the power curve progression comprises a step of identifying the power nadir, i.e. the lowest level of power output when the rotor speed has reduced to its minimum allowable level. With this information, the response management module can identify the optimal time at which to commence releasing the stored power, i.e. the response management module "works backwards" to identify the time at which the second power quantity should be injected into the grid to ensure that the total power remains close to the initial power output level.

The inventive control arrangement is preferably configured to provide at least the first monitoring module and the computation module with real-time and/or predicted operating parameters. The operating parameters may comprise any of wind speed, aerodynamic rotor velocity, aerodynamic rotor deceleration rate, generator rotor velocity, etc.

The power curve progression PCP shall be understood as the shape of the power curve from the time at which inertial response begins to the time at which the speed of the rotating mass has recovered to its pre-event state. This power curve progression can be computed using various relevant parameters such as those mentioned above. It shall be understood that the shape of the power curve, i.e. the power curve progression, will depend on various factors such as the wind speed and rate of change of wind speed during the inertial response or "power boost". If the wind speed decreases significantly during the first phase of inertial response, the duration of the recovery period will be correspondingly longer because the new operating point of the turbine after inertial response will be lower than before. Similarly, if wind speed increases during the initial stage of inertial response, the recovery period will be shorter. The severity (duration) of the recovery period depends largely also on the predetermined value of active power increase, i.e. on the quantity of kinetic energy that can be stored in the rotor of the wind turbine. This value can be fixed for a wind power plant (e.g. 1%, 5%, 10% of nominal power) or it can change depending on the severity of the grid frequency event. For larger frequency disturbances it can be selected to provide a larger active power increase, resulting however in a steeper recovery period. The length of time for the wind turbine to return to its prior operating point is directly related to the magnitude of the power boost.

In a preferred embodiment of the invention, a wind turbine of the wind power plant comprises a grid-forming inverter, instead of a grid-following inverter. During the inventive method, i.e. during primary response to a grid under-frequency event, the grid-side inverter of the wind turbine is operated in grid-forming mode. A grid-forming inverter refers to an inverter with the capability of controlling its terminal voltage (amplitude and phase) directly without the need to calculate the grid frequency explicitly. The inherent benefit of grid-forming inverters is that since no frequency measurement mechanism is present, they can react significantly faster to grid under-frequencies than converters without grid-forming control.

In a further preferred embodiment of the invention, a storage arrangement comprises a grid-side inverter, which is operated in grid-forming mode.Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 and 2 show an exemplary realisations of a wind power plant comprising storage arrangements;
Figure 3 shows power curves of a wind power plant controlled according to the prior art;
Figure 4 shows frequency response of a wind power plant controlled according to the prior art;
Figure 5 is a block diagram of an embodiment of the inventive control arrangement;
Figure 6 shows power curves of a wind power plant controlled according to the inventive method;
Figure 7 shows a frequency response of a wind power plant controlled according to the inventive method;
Figure 8 shows power curves of a wind power plant controlled according to the inventive method;
Figure 9 shows power curves of a wind power plant controlled according to the prior art;
Figure 10 shows power curves of a wind power plant controlled according to the inventive method.

In the diagrams, like numbers refer to like objects throughout. Objects in the diagrams are not necessarily drawn to scale.

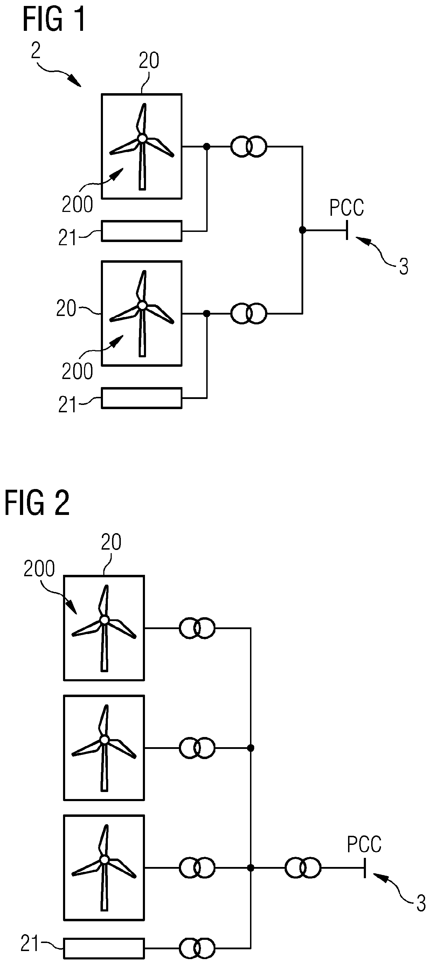

Figures 1 and 2 each show an exemplary realisation of a wind energy plant 2, with wind turbines 20 and storage arrangements 21. In Figure 1, a storage arrangement 21 is provided at the LV side of a generator-side transformer. In Figure 2, a storage arrangement 21 is provided at the MV side of a generator-side transformer. The total combined power is fed into a point of common connection (PCC) at the grid 3. A storage arrangement 21 can comprise one or more power storage devices that are maintained in a charged state, for example by using surplus wind power. A power storage device can be any of a super-capacitor, a battery, a flywheel, etc.

During normal operation of a wind energy plant 2, the total combined power originates from the wind turbines 20. A park controller (not shown) can issue setpoints to the wind turbines to ensure that the total combined power meets the grid requirements at any one time. In these exemplary embodiments, the storage arrangements 21 can contribute to the total combined power following a grid under-frequency event.

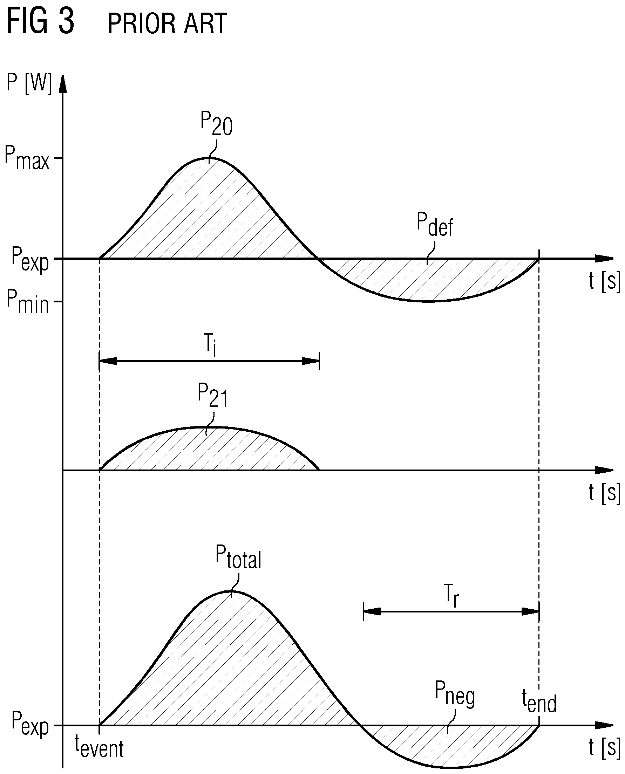

During normal operation, the output power Pₑₓₚ depends on wind conditions and is referred to as the available power, since it is usually the maximum available power that can be harvested under the current wind conditions and exported to the grid. Following a grid under-frequency event at time tₑᵥₑₙₜ as shown in Figure 3, the kinetic energy stored in the rotating mass 200 can be released, i.e. additional power can be injected into the grid 3 during phase Tᵢ to contribute to grid stability. In the prior art control method illustrated by this diagram, the output power drops at some point to a minimum or power nadir Pₘᵢₙ and the rotor is prevented from slowing down any further in order to avoid stalling. From this time tₘᵢₙ onwards, the converter controller can issue appropriate control setpoints to allow the generator to increase speed during a recovery period Tᵣ to return towards the operating point prior to the frequency event, i.e. to return towards the previous level of output power Pₑₓₚ.

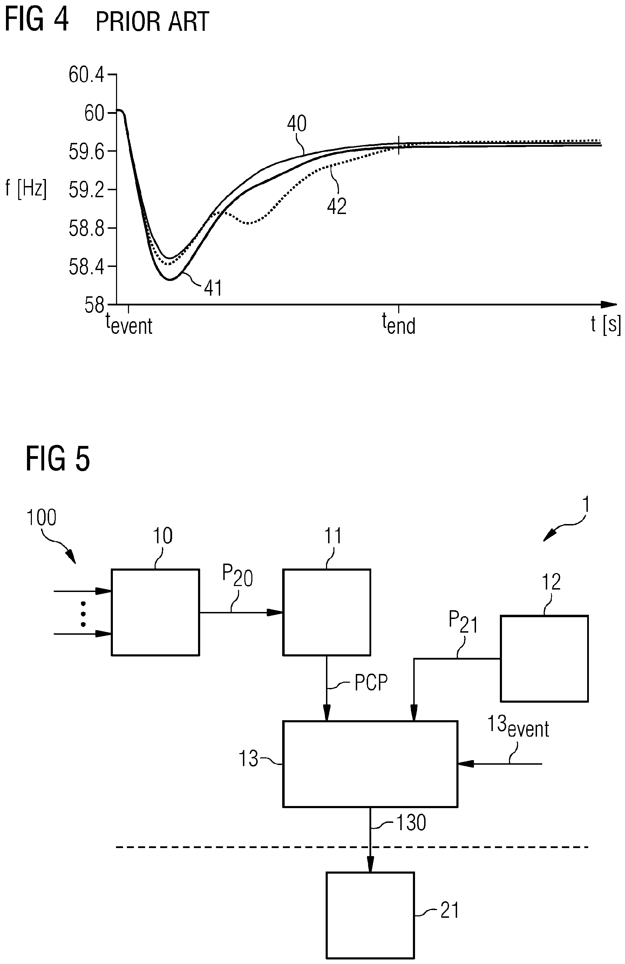

In the prior art as shown in Figure 3, it is known to commence releasing power P₂₁ from an additional storage arrangement as soon as the negative frequency event is reported, i.e. at time tₑᵥₑₙₜ. However, after reaching the maximum total power output, the combined output power Pₜₒₜₐₗ drops to an unfavourably low level, manifesting as a pronounced power "dip" to the power nadir Pₘᵢₙ during the recovery period Tᵣ in which the wind energy plant strives to return towards its previous operating point. The resulting power deficit P_{neg} contributes to the second frequency "dip" referred to in the introduction and shown in Figure 4, which indicates a desired or benchmark frequency response 40 for an exemplary power network fed by (amongst others) a wind power plant, and wherein the nominal grid frequency is 60 Hz. The diagram also shows two possible response curves. A first curve 41 shows the frequency response in the case that the wind power plant does not provide inertial response. In this case, the grid frequency is not prevented from dropping to an unfavourably low level near 58.2 Hz. However, the grid requirement, indicated by curve 40, states that the frequency may not drop below 58.4 Hz. Such a wind power plant would therefore fail to comply with the benchmark frequency response. By constructing the wind power plant to provide inertial response (e.g. using variable-speed wind turbines), it is possible to fulfil this requirement as indicated by curve 42. However, owing to the depletion of the stored kinetic energy and the ensuing recovery time, the frequency response 41 exhibits a second undesirable "dip" in grid frequency from about 59 Hz down to 58.8 Hz. In a grid dominated by wind power plants, this second under-frequency event may be even more severe than the first under-frequency event. In such a scenario, with a second dip being more severe than the initial under-frequency, the inertial response of the wind power plant would have worsened the transient event and would have failed to make a positive contribution towards restoring grid frequency. Severe frequency dips can lead to load shedding or even to blackouts in extreme cases.

It may take quite some time for the system to return to the nominal frequency (60 Hz in this example). The primary response stage begins with the first few seconds and can last up to a few minutes. During this transient grid state, a grid operator attempts to bring the grid frequency back towards its nominal power with appropriate primary response switching events. At the conclusion of primary response, the grid frequency may have returned to a higher level (59.6 Hz in this example). It is then the task of secondary and tertiary reserve to bring the system back to its nominal frequency, and this can take up to several hours. Similar frequency curves would apply for a different nominal system frequency, for example 50 Hz.

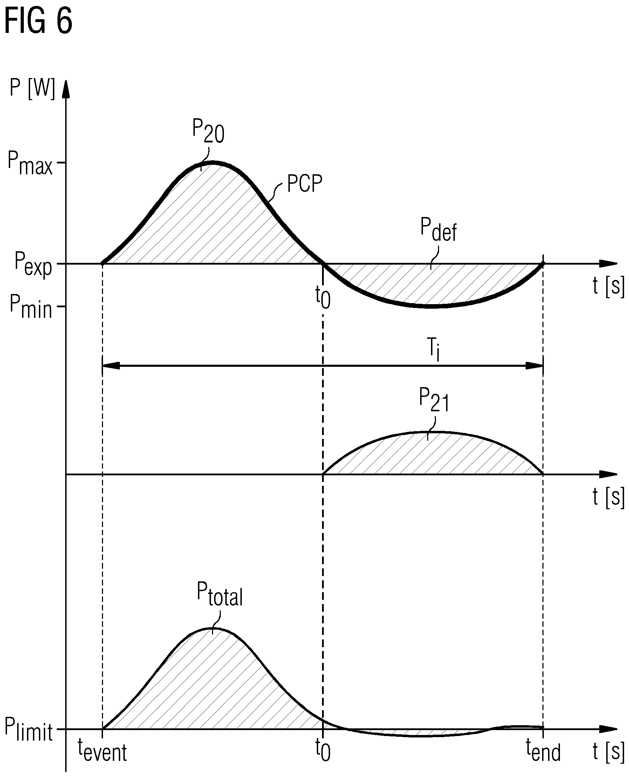

Figure 5 is a simplified block diagram of an embodiment of the inventive control arrangement 1, and Figure 6 shows exemplary power curves during an inertial response situation. As explained above, the wind power plant 2 comprises a number of wind turbines 20 and a storage arrangement 21 comprising one or more power storage devices 21. The wind power plant 2 can provide inertial response following a grid under-frequency event. The control arrangement 1 comprises a monitoring module 10 which is realised to determine the power P₂₀ stored in the rotating mass 200 of a wind turbine 20 at any one time, for example at the current operating point. A computation module 11 is configured to predict the power curve progression PCP if the first power quantity P₂₀ were to be injected into the grid. The power curve progression PCP describes the shape of the power curve during injection (timespan Tᵢ) and subsequent recovery (timespan Tᵣ) towards an operating point for the hypothetical case in which only the stored kinetic energy would provide the power boost in response to a grid under-frequency event. The monitoring module 10 is configured to relate the quantity of stored power P₂₀ (i.e. the magnitude of this "power boost") to the time it would take for the wind turbine to return to the prior operating point, and to predict the shape of the power curve PCP. With this information, it is possible to determine the area of the "power deficit" P_{def}, i.e the area defined by the horizontal axis (the previous power output Pₑₓₚ) and the PCP curve for all values of output power less than the previous power output Pₑₓₚ. In this exemplary embodiment, the operating point is the initial output power level Pₑₓₚ. The stored power P₂₀ available in the rotating mass 200 and the associated power curve progression PCP can be computed from various inputs 100, for example wind speed, pitch angle, aerodynamic rotor velocity, aerodynamic rotor deceleration rate, generator rotor velocity, etc. A second monitoring module 12 keeps track of a second power quantity P₂₁ available in the storage arrangement 21. For example, the available power quantity P₂₁ can be tracked in real time by individual storage controllers. With suitable communication links between the distributed individual storage controllers and the central monitoring module 10, this can keep track of the total power quantity P₂₁ available in the storage arrangement 21.

In the event of a drop in grid frequency at time tₑᵥₑₙₜ, this is reported to the control arrangement 1, for example as an input signal 13ₑᵥₑₙₜ to a response management module 13. Knowing the quantity of stored power P₂₀ available from the kinetic energy of the rotating mass, the power curve progression PCP, and the second power quantity P₂₁, the response management module 13 identifies the optimal time instant t₀ at which to commence releasing the second power quantity P₂₁ so that the combined output power Pₜₒₜₐₗ of the wind power plant 2 will remain above a pre-defined threshold Pₗᵢₘᵢₜ, in this case the power output Pₑₓₚ immediately preceding the under-frequency event. Alternatively, this pre-defined threshold Pₗᵢₘᵢₜ may be defined as a percentage of the previous output level Pₑₓₚ, for example 0.95Pₑₓₚ or 0.99Pₑₓₚ. The second power quantity P₂₁ can be released in a controlled manner by issuing an appropriate setpoint 130 or sequence of setpoints 130. The outcome of this controlled power release over phase Tᵢ (until the second power quantity P₂₁ is depleted) is a combined output power Pₜₒₜₐₗ that does not exhibit any "deficit", i.e. without any recovery phase as is the case in the prior art and explained in Figure 3. This is because the stored power is released in such a way as to cancel out the power deficit area P_{def} of the power curve progression PCP, i.e. the region of the power curve progression PCP below the level of the power output Pₑₓₚ immediately preceding the under-frequency event.

The monitoring module keeps track of the power stored in the available storage device(s). With this information, the response management module can identify the time instant t₀ at which to commence releasing the second power quantity P₂₁ in order to maintain the combined output power above the pre-defined threshold up until time t_{end}. For example, the response management module 13 may determine the expected rates of increase and decrease in total power output, as well as the shape of the total power curve, in order to determine a favourable time instant t₀. A storage device such as a flywheel may release energy at a slower rate than a battery, for example; one type of storage device may release a large quantity of power in a brief time, compared to another type of storage device which may release its stored power in a slower manner.

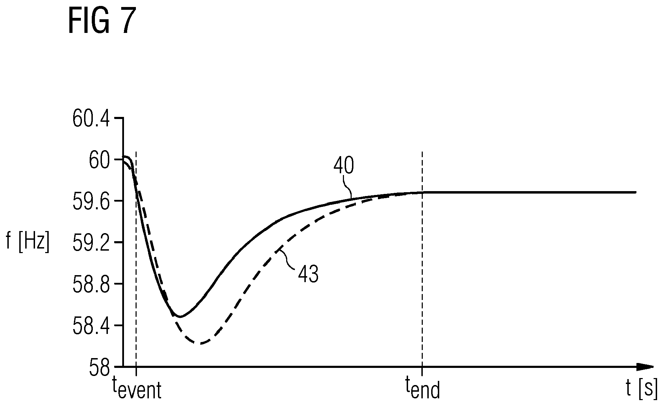

Figure 7 shows frequency response curves for an exemplary power network as explained in Figure 4 above, with the benchmark curve 40 again showing the expected or required frequency response for this network fed by a wind power plant. Here, the curve 43 describes the frequency response when the grid is fed by a wind power plant controlled according to the inventive method. This curve 43 achieves the benchmark minimum frequency, and essentially follows the benchmark curve 40 as the grid frequency returns towards the nominal level. Because of the carefully choreographed release of stored power, there is no "second dip" in grid frequency, which instead follows a favourably smooth progression.

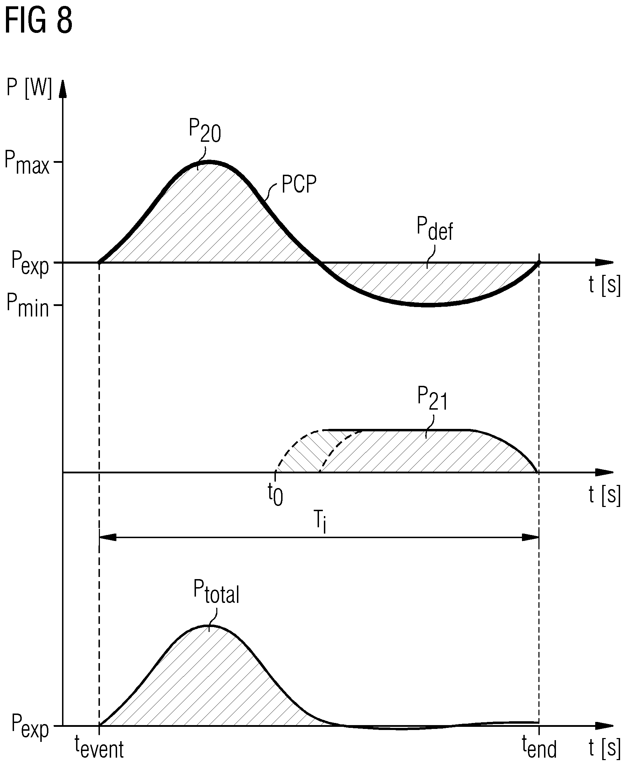

Figure 8 shows further exemplary power curves for a wind power plant controlled according to the invention. Here, the quantity of power P₂₁ in the storage device arrangement is more than is needed to counteract the negative region of the power curve PCP (the surplus is indicated by the broken line), and the stored power P₂₁ is released in a controlled manner as described above so that the total combined output power or power boost Pₜₒₜₐₗ is correspondingly larger (the additional quantity is indicated by the broken line), and also does not drop below the power output level Pₑₓₚ prior to the under-frequency event.

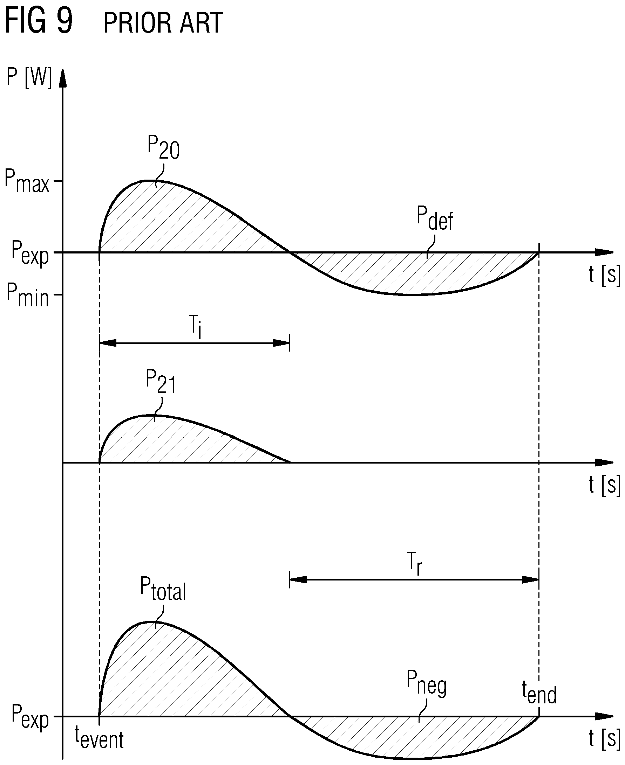

As explained above, a wind energy plant can be configured to deploy a grid-forming inverter. Figure 9 shows power curves of such a wind energy plant controlled using the prior art approach. With a grid-forming configuration, the stored power P20, P21 is released at a greater rate, and the maximum of the power boost Pₜₒₜₐₗ is reached sooner. However, the system still shows a pronounced power "dip" P_{neg} and recovery period Tᵣ during which the wind energy plant must return towards its previous operating point.

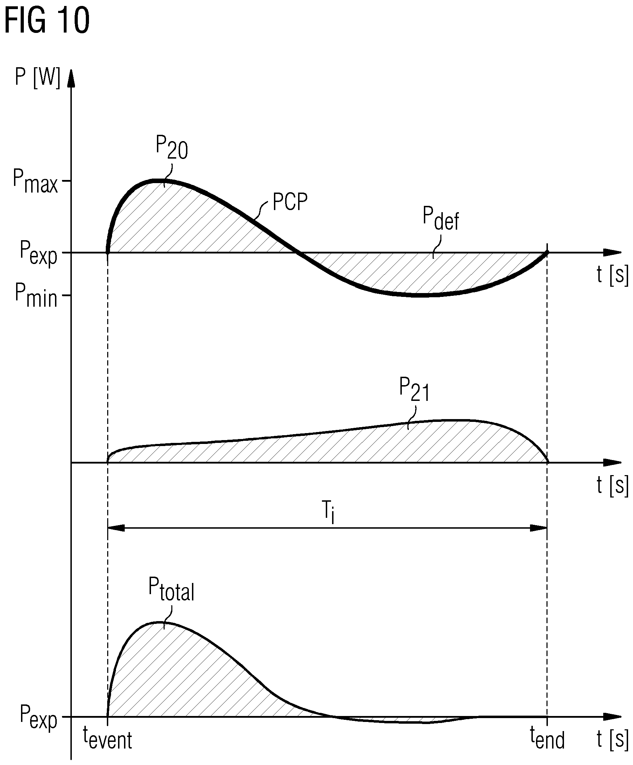

Figure 10 shows power curves for a wind energy plant with grid-forming functionality, controlled according to the inventive method. Release of the stored power P₂₁ commences at the beginning of the frequency event at time tₑᵥₑₙₜ, but in such a way as to compensate the negative region of the power curve progression PCP. With this approach, the amplitude of the combined stored power Pₜₒₜₐₗ is lower in the first seconds compared to the prior art approach shown in Figure 9, but the wind energy plant avoids the negative effect of a recovery period seen in the prior art approach of Figure 9, since the output power remains essentially at the pre-event level Pₑₓₚ.

Although the present invention has been disclosed in the form of preferred embodiments and variations thereon, it will be understood that numerous additional modifications and variations could be made thereto without departing from the scope of the invention. For example, although a wind power plant comprising several wind turbines has been described, it shall be understood that the inventive control arrangement and method apply equally well to a wind power plant comprising a single wind turbine.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A control arrangement (1) of a wind power plant (2) comprising a number of wind turbines (20) and a number of storage arrangements (21), which control arrangement (1) comprises
- a first monitoring module (10) configured to determine a first power quantity (P₂₀) stored in the rotating mass (200) of a wind turbine (20);
- a computation module (11) configured to predict a power curve progression (PCP) during injection (Tᵢ) of the first power quantity (P₂₀) into the grid (3) and during a subsequent recovery phase (Tᵣ);
- a second monitoring module (12) configured to determine a second power quantity (P₂₁) available in a storage arrangement; and
- a response management module (13) configured to identify a time instant (t₀) at which to commence release of the second power quantity (P₂₀) in order to maintain the combined output power (Pₜₒₜₐₗ) of the wind power plant (2) at a pre-defined threshold (Pₗᵢₘᵢₜ) during inertial response following a grid under-frequency event.

2. A control arrangement according to claim 1, wherein the pre-defined threshold (Pₗᵢₘᵢₜ) is the power output level (Pₑₓₚ) preceding the grid under-frequency event.

3. A control arrangement according to any of the preceding claims, wherein the pre-defined threshold (Pₗᵢₘᵢₜ) comprises at least 90%, more preferably at least 95%, most preferably at least 99% of the power output level (Pₑₓₚ) preceding the grid under-frequency event.

4. A control arrangement according to any of the preceding claims, configured to provide at least the first monitoring module (10) with operating parameters (100) of the wind power plant (2).

5. A control arrangement according to any of the preceding claims, wherein the operating parameters (100) comprise any of wind speed, pitch angle, aerodynamic rotor velocity, aerodynamic rotor deceleration rate, generator rotor velocity.

6. A control arrangement according to any of the preceding claims, wherein a storage arrangement (21) comprises any of a super-capacitor, a battery, a flywheel.

7. A method of controlling a wind power plant (2) to provide inertial response following a grid under-frequency event, the wind power plant (2) comprising a number of wind turbines (20) and a number of storage arrangements (21), which method comprises the steps of
- determining a first power quantity (P₂₀) stored in the rotating mass (200) of the number of wind turbines (20);
- predicting the power curve progression (PCP) during release (Tᵢ) of the first power quantity (P₂₀) and during subsequent recovery (Tᵣ);
- determining a second power quantity (P₂₁) available in the number of storage arrangements (21);
- and, on the basis of the predicted power curve progression (PCP) and the second power quantity (P₂₁), identifying a time instant (t₀) at which to commence release of the second power quantity (P₂₁) in order to maintain the combined output power (Pₜₒₜₐₗ) of the wind power plant (2) at a pre-defined threshold (Pₗᵢₘᵢₜ).

8. A method according to claim 7, wherein the power curve progression (PCP) is computed at least on the basis of current operating parameters (100).

9. A method according to any of the preceding method claims, wherein the current operating parameters (100) comprise any of wind speed, aerodynamic rotor velocity, aerodynamic rotor deceleration rate, generator rotor velocity.

10. A method according to any of the preceding method claims, wherein the step of predicting the power curve progression (PCP) comprises a step of identifying the time at which the power output will decrease to the previous output power level (Pₑₓₚ).

11. A method according to any of the preceding method claims, wherein the step of predicting the power curve progression (PCP) comprises a step of computing a minimum power output (ΔPₘᵢₙ).

12. A method according to any of the preceding method claims, comprising a step of controlling the rotating mass (200) of a further wind turbine (20) as a storage arrangement (21).

13. A method according to any of the preceding method claims, wherein a wind turbine (20) comprises a grid-forming inverter, and wherein the grid-forming inverter of the wind turbine (20) is operated in grid-forming mode.

14. A method according to any of the preceding method claims, wherein a storage arrangement (21) comprises a grid-forming inverter, and wherein the grid-forming inverter of the storage arrangement (21) is operated in grid-forming mode.

15. A computer program product comprising a computer program that is directly loadable into a memory of a wind power plant control arrangement (1) according to any of claims 1 to 7 and which comprises program elements for performing steps of the method according to any of claims 8 to 12 when the computer program is executed by the control arrangement (1).
